# EUROPEAN PATENT APPLICATION

(11) **EP 1 889 711 A1**
(43) Date of publication of application: **20.02.2008**
(21) Application number: 06730387.5
(22) Date of filing: 29.03.2006
(51) Int. Cl.: B32B 1/08, F16L 11/04

(54) **CONTROL TUBE**

(30) Priority: 13.05.2005 JP 2005141416
(71) Applicant: Aoi Co., Ltd., Gotenba-shi Shizuoka 4120047 (JP)
(72) Inventor: Hosoya, Kinji, Gotenba-shi, Shizuoka 4120007 (JP); Kimura, Masahiro, Gotenba-shi, Shizuoka 4120007 (JP)
(74) Representative: Woods, Geoffrey Corlett
(86) International application number: PCT/JP2006/306439
(87) International publication number: WO 2006/120811

(57) **Abstract**

This invention relates to a control tube comprising an inner core tube or tubes and a protective sheathing, wherein the inner core tube or tubes are predominantly composed of hydrocarbon-based elastomers and the protective sheathing is composed of a non-halogen and non-phosphorus flame retardant resin composition containing magnesium hydroxide and a silicone flame retardant. Use of such control tube reduces or eliminates influence on people who are engaged in handling a related product and influence on the environment throughout the process, including production, use, and disposal of the control tube.

## Description

### Technical Field

The present invention relates to a control tube.

### Background Art

A control tube is a product that is also referred to as a weld sputter-resistant tube, a cover hose, or the like. It has a bilayer structure composed of inner core tubes and a protective sheathing (an outer sheathing). A protective sheathing is provided to protect the inner core tubes, which actually allow air or a fluid such as water to flow therein, from external influences, such as ultraviolet rays, fire, heat sources (e.g., weld sputter), impact, or abrasion. Since the inner core tubes are solely inserted into a joint when the joint is actually connected to the bilayer-structured tube, the protective sheathing of the joint insertion site should be easy to cut with the use of a knife or the like, and it should be easy to peel by hand.

Thus, inner core tubes are required to actually perform as tubes, a protective sheathing is provided to protect the inner core tubes, and unnecessary portions should be easy to peel. Accordingly, the thermoplastic resin or rubber used for the protective sheathing is different from that used for inner core tubes (i.e., different thermoplastic resins or rubbers are used). Hereafter, products that are actually produced are introduced.

Performance, such as mechanical properties or flexibility, is important for a material used for inner core tubes. Thus, nylon (nylon 11 or 12) tubes or polyurethane tubes are mainly used as inner core tubes, and a protective sheathing is made of polyvinyl chloride resin, chloroprene rubber, or chlorinated polyolefin resin. Since the UV light resistance of such material used for the protective sheathing is remarkably improved by being blended with black coloring, a tube resulting from black color mixing becomes particularly effective as a tube for exterior piping. All the sheathing resins or rubbers are made of halogenated compounds containing chlorine. Such compounds are used as protective materials because of their flame retardant properties upon scattering and adhesion of weld sputter. Further, halogenated substances such as brominated flame retardants or enviromnent-burdening substances such as antimony substances are often added in order to further improve flame retardant properties. Since such protective material is required to be soft so as not to inhibit the flexibility of the inner core tubes, a so-called plasticizer is incorporated, and such plasticizer is often made of phthalate ester such as dioctyl phthalate (DOP). DOP is a representative material on which various regulations have been provided in respect of environmental hormones (endocrine-disrupting agents) in recent years. One of the reasons why a plasticizer such as DOP should be added is that, in addition to flexibility, use of this product usually involves cutting of a portion of the protective sheathing with a knife or the like at the time of piping to a joint, peeling thereof by hand, and exposure of the inner core portion to insert the same into a joint, as described above.

Thus, a protective sheathing should be easy to peel from inner core tubes, the inner core tubes and the protective sheathing are made of different materials and thus do not adhere to each other, and the protective sheathing should be soft and easy to tear. This has required the use of material comprising a plasticizer or the like, which was flexible, easy to tear, and easy to peel.

Nylon tubes or polyurethane tubes used as the inner core tubes are highly proven tubes that have been heretofore often used for air piping or water piping. The formation of such tubes or the use thereof for piping does not substantially influence the environment. Thus, it can be said that such tubes are safe products for the human body and the environment.

Since nylon and polyurethane are nitrogen-containing polymers, incineration of waste generated at the time of production or piping or at the time of disposal of used products is impossible, and recycle of such resin is difficult. Thus, such substances must be handled as industrial waste.

Specifically, nylon and polyurethane are nitrogen-containing polymers. When such substances are combusted in a general incinerator (incineration temperature: about 750°C), accordingly, nitrogen as a constituent element reacts with oxygen in the air to generate nitrogen oxide (NOx), and other constituent elements such as carbon or hydrogen react with nitrogen to generate toxic gases such as hydrogen cyanide (HCN) and ammonia (NHx). Complete combustion of a nitrogen-containing polymer requires the use of a special incinerator that is capable of combustion at 1,000°C or higher. Use of an incinerator that is capable of combustion at high temperatures can reduce the amount of hydrogen cyanide or ammonia generated to a level equivalent to or lower than the level acceptable for the environment. However, the amount of nitrogen oxide resulting from a reaction with oxygen in the air would not be decreased, and this requires special equipment for preventing nitrogen oxide from being emitted to the environment (i.e., flue-gas denitration equipment). In practice, however, only a limited number of institutions are provided with such an expensive equipment, and thus, such toxic substances must be handled as industrial waste. Toxicity of nitrogen oxide, i.e., influence thereof on the human or animal respiratory system, as a cause of urban ozone formation, and the like, is known.

Since the material of the inner core tube is different from that of the protective sheathing as described above, such materials must be sorted at the time of handling thereof as industrial waste. This requires the separation of an integrated product into pieces. Specifically, the protective sheathing is peeled from inner core tubes by cutting the coating with a knife or the like to separate the protective sheathing from the inner core tubes, and disposal thereof must be consigned to industrial waste disposal services.

Also, a chlorine-based compound used for a protective sheathing generates more toxic chlorine gas than the above nitrogen-containing polymer upon the incineration thereof, which may in turn generate a toxic gas, such as dioxin. Thus, incineration thereof is, of course, impossible.

A protective sheathing uses a chlorine-based compound such as polyvinyl chloride resin (PVC) as described above. At the time of forming a tube, chlorine gas is generated upon melting, which would worsen the working environment and also worsen the environment because of the generation of a chlorine gas during exposure to external fire or heat at the time of use of the product. Further, a compound such as phthalate ester (e.g., DOP) that is often used for a plasticizer has been designated as a target of reduction because of the issue of environmental hormones or the like in recent years (targets of the Pollutant Release and Transfer Register (PRTR) Project).

JP Patent Publication (kokai) No. 2001-139829 A (claims 1 and 4 to 6) discloses a hose comprising an outer layer constituted of a thermoplastic elastomer composition comprising a thermoplastic polymer comprising, as a main component, an olefinic resin or hydrogenated styrene thermoplastic elastomer, a rubber comprising, as a main component, an ethylene-propylene-diene copolymer (EPDM), red phosphorus, and a hydroxide; and an inner layer comprising, as a main component, a thermoplastic polymer.

Red phosphorus, however, disadvantageously generates phosphine gas that is toxic to human bodies at the time of incineration and it is thus designated as a specific substance according to the air pollution control law.

### Disclosure of the Invention

### Object of the Invention

The present-invention is intended to resolve the drawbacks of conventional control tubes and to reduce or eliminate influence on people who are engaged in handling the product and the environment throughout the process, including production, use, and disposal of the same.

### Means for attaining the Object

The present invention is summarized as follows.
(1) A control tube comprising an inner core tube or tubes and a protective sheathing, wherein the inner core tube or tubes are mainly composed of hydrocarbon-based elastomers and the protective sheathing is composed of a non-halogen and non-phosphorus flame retardant resin composition comprising magnesium hydroxide and a silicone flame retardant.
(2) The control tube according to item (1), wherein the elastomer that constitutes the inner core tube or tubes is composed of polypropylene and a hydrogenated styrene elastomer.
(3) The control tube according to item (1) or (2), wherein the elastomer that constitutes the inner core tube or tubes contains a light stabilizer.
(4) The control tube according to any of items (1) to (3), wherein the base resin of the non-halogen and non-phosphorus flame retardant resin composition that constitutes the protective sheathing is an ethylene/vinyl acetate copolymer.
(5) The control tube according to any of items (1) to (4), wherein the protective sheathing comprises an inorganic filler.

### Effects of the Invention

According to the present invention, influences on people who are engaged in handling the product and on the environment can be reduced or eliminated throughout the process, including production, use, and disposal of the same.

### Preferred Embodiments of the Invention

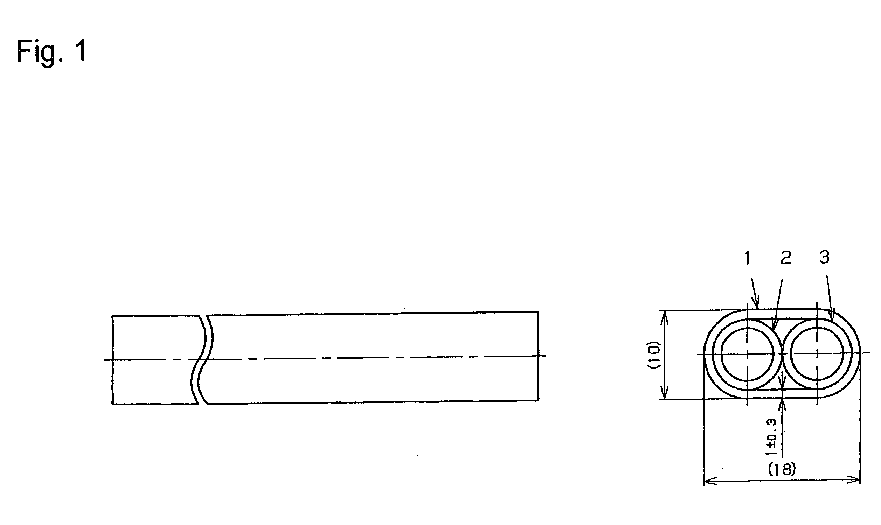

The control tube of the present invention is composed of an inner core tube or tubes and a protective sheathing that covers the exterior of the inner core tube or tubes. The number of inner core tubes is not particularly limited, and it is generally 1 to 10 and preferably 1 to 7. The external size of the control tube of the present invention varies depending on, for example, the number of, the external sizes of, or other conditions concerning inner core tubes, and it is generally 5 to 22 mm x 5 to 22 mm. The external size and the internal size of the inner core tube is generally 3.5 to 13 mm x 2 to 9.5 mm. The configuration of a cross section of the control tube of the present invention varies depending on the number of inner core tubes or other conditions, and it is generally a circular form when the number of the inner core tubes is 1. It is a track form when the number of the inner core tubes is 2, it is a triangle when the number of the inner core tubes is 3, and it is a hexagon when the number of the inner core tubes is 7. Fig. 1 shows a front view and a cross-sectional view of a control tube (external size: 18 mm x 10 mm) comprising 2 inner core tubes with the external sizes and the internal sizes of 8 mm x 6 mm.

In the present invention, the inner core tube is mainly composed of a hydrocarbon-based elastomer in order to enable incineration and to reduce burdens at the time of disposal. Elastomers that are used as materials for inner core tubes are not particularly limited, provided that such elastomers are hydrocarbon-based thermoplastic elastomers. Examples thereof include: polystyrene-based elastomers composed of polystyrene (a hard phase) and polybutadiene, polyisoprene, vinyl-polyisoprene, hydrogenated polybutadiene, hydrogenated polyisoprene, or hydrogenated vinyl-polyisoprene (a soft phase); and polyolefin-based elastomers composed of polyolefin resin (e.g., polyethylene or polypropylene) (a hard phase) and an ethylene-α-olefin copolymer, ethylene-α-olefin-nonconjugated polyene copolymer (e.g., EPDM), or butyl rubber (a soft phase). The polystyrene-based elastomers may include polyolefin resin such as polypropylene according to need.

The material of an inner core tube is preferably a polypropylene-hydrogenated styrene elastomer mixture from the viewpoint of bending fatigue resistance and flexibility. The ratio of polypropylene to the hydrogenated styrene elastomer in such a mixture is preferably 85:15 to 40:60, and more preferably 80:20 to 60:40, by weight.

In addition to the above-described components, the material of an inner core tube can include, for example, an antioxidant, a thermostabilizer, an ultraviolet absorber, and a light stabilizer for improving weather resistance, according to need. As such light stabilizer, a hindered amine-based light stabilizer is preferable since it is highly compatible with the base resin of the inner core tube, it has effective ultraviolet ray resistance, and it does not deteriorate properties of the base resin. Examples of a hindered amine-based light stabilizer include a polycondensate of dibutylamine-1,3,5-triazine-N,N'-bis(2,2,6,6-tetramethyl-4-piperidyl-1,6- hexamethylenediamine and N-(2,2,6,6-tetramethyl-4-piperidyl)butylamine, a polymer of dimethyl succinate and 4-hydroxy-2,2,6,6-tetramethyl-1-piperidineethanol, and bis(2,2,6,6-tetramethyl-4-piperidyl)sebacate. Such hindered amine-based light stabilizers may be used alone or in combinations of two or more. When a hindered amine-based light stabilizer is mixed, the amount thereof is generally 0.3 to 1 part by weight per 100 parts by weight of a base resin. From the viewpoint of excellent ultraviolet ray resistance and the absence of influence on base resin properties and forming balance, such figure is preferably 0.5 to 0.8 parts by weight. By mixing a light stabilizer or preferably a hindered amine-based light stabilizer with the material of the inner core tubes, ultraviolet-ray-induced deterioration can be prevented at portions of the inner core tubes at which a protective sheathing has been peeled upon insertion into a joint.

The protective sheathing is composed of a non-halogen and non-phosphorus flame retardant resin composition comprising magnesium hydroxide and a silicone flame retardant.

A base resin of the non-halogen and non-phosphorus flame retardant resin composition is not particularly limited, provided that it is a non-halogen resin. Examples thereof include: non-halogen vinyl resins, such as an ethylene-vinyl acetate copolymer or an ethylene-ethyl acrylate copolymer; and non-halogen olefin resins. An ethylene-vinyl acetate copolymer or an ethylene-ethyl acrylate copolymer is preferable, since flexibility can be attained without the use of a plasticizer. The amount of the base resin in the non-halogen and non-phosphorus flame retardant resin composition is generally 30% to 50% by weight, and preferably 40% to 45% by weight.

Both the inner core tubes and the protective sheathing may comprise, as base resins, vinyl resins, so that they can be handled in the same manner throughout the process, including production of tubes, use thereof, and disposal of used tubes. In addition, when these materials are completely combusted at the time of incineration for disposal, the generated substances are water vapor and carbon dioxide, no toxic gas is generated, and no burden is imposed on humans or on the environment. The generated substances can be used for fuels, and they can contribute in the form of energy at the time of incineration.

In the present invention, magnesium hydroxide is incorporated into a non-halogen and non-phosphorus flame retardant resin composition, which is a material of the protective sheathing, in order to produce flame retardant tubes without the use of an environment-burdening substance such as a halogenated compound. Magnesium hydroxide has satisfactory flame retardant properties, it has good compatibility with and dispersibility in a non-halogen resin as a base resin, and it does not deteriorate mechanical properties of the tube. The amount of magnesium hydroxide in the non-halogen and non-phosphorus flame retardant resin composition is generally 40% to 60% by weight, and preferably 48% to 53% by weight. The amount of magnesium hydroxide is generally 100 to 150 parts by weight, and preferably 110 to 130 parts by weight, per 100 parts by weight of a base resin.

In the present invention, it is necessary to mix a silicone flame retardant in the non-halogen and non-phosphorus flame retardant resin composition, which is a material for the protective sheathing, from the viewpoint of the ease of tearing and easy peelability of the protective sheathing. Preferably, the base material further comprises an inorganic filler.

The silicone flame retardant is not particularly limited, provided that it is an organic compound containing silicon atoms. Examples thereof include silicone oil, silicone rubber, and silicon resin. Examples of the silicone oil include dimethyl silicone oil, methyl phenyl silicone oil, methyl hydrogen silicone oil, and polyether-modified silicone oil. Examples of the silicone rubber include methyl silicone rubber and methyl phenyl silicone rubber. Examples of the silicone resin include methyl silicone, methyl phenyl silicone, and phenyl silicone. Also, the silicon-atom-containing organic compound may comprise a functional group such as a -OH, -NH₂, -NCO, -COOH, -CHO, -SH, methylol, acrylate, methacrylate, silyl, glycidyl, or epoxy group.

The amount of the silicone flame retardant in the non-halogen and non-phosphorus flame retardant resin composition is generally 1.0% to 2.0% by weight, and preferably 1.2% to 1.3% by weight. Such amount is generally 2.3 to 4.7 parts by weight, and preferably 2.8 to 3.0 parts by weight, per 100 parts by weight of the base resin.

Any inorganic filler may be used without particular limitation, provided that it is an inorganic filler other than magnesium hydroxide that can be mixed in a flame retardant resin composition. Examples thereof include inorganic oxides, typified by zinc stannate, a silicate, a carbonate, and molybdenum. Preferable examples of inorganic fillers include those having effects of modifying, e.g., improving peelability, such as zinc stannate or magnesium carbonate.

The amount of the inorganic filler in the non-halogen and non-phosphorus flame retardant resin composition is generally 2.0% to 10.0% by weight, and preferably 3.0% to 5.0% by weight. Such amount is generally 4.6 to 23.2 parts by weight, and preferably 7.1 to 11.6 parts by weight, per 100 parts by weight of a base resin.

In addition to the above components, the non-halogen and non-phosphorus flame retardant resin composition may further comprise, for example, a processability-improving agent, an antioxidant, a modifier, a crosslinking agent, a pigment, an ultraviolet absorber, or a thermostabilizer according to need.

Preferably, the material of the inner core tubes and the protective sheathing does not comprise a plasticizer such as DOP from the viewpoint of influence on the environment, such as via environmental hormones.

The control tube of the present invention can be produced in the following manner, for example.

At the outset, inner core tubes comprising polypropylene and hydrogenated styrene elastomers are produced in advance with the use of an extruder.

Subsequently, the inner core tubes that have been thoroughly cooled and stored until they become stabilized in the air are introduced into a form at the outlet of a crosshead extruder, and a protective sheathing of a resin raw material comprising a non-halogen and non-phosphorus flame retardant resin composition is provided via a crosshead extruder.

When simultaneous extrusion of two layers is carried out instead of such 2-step production system, for example, a resin for the inner core tubes and a resin for the protective sheathing melt with each other, which makes peeling of the "protective layer," which is the object of the present invention, impossible.

Even if such 2-step forming is carried out, use of vinyl resins as base resins for the inner core tubes and the protective sheathing results in adhesion of the inner core tubes and the protective sheathing because of their compatibility, which makes peeling thereof difficult. Accordingly, forming conditions and means-that can prevent the inner core tubes from melting at the time of provision of the protective sheathing are preferable.

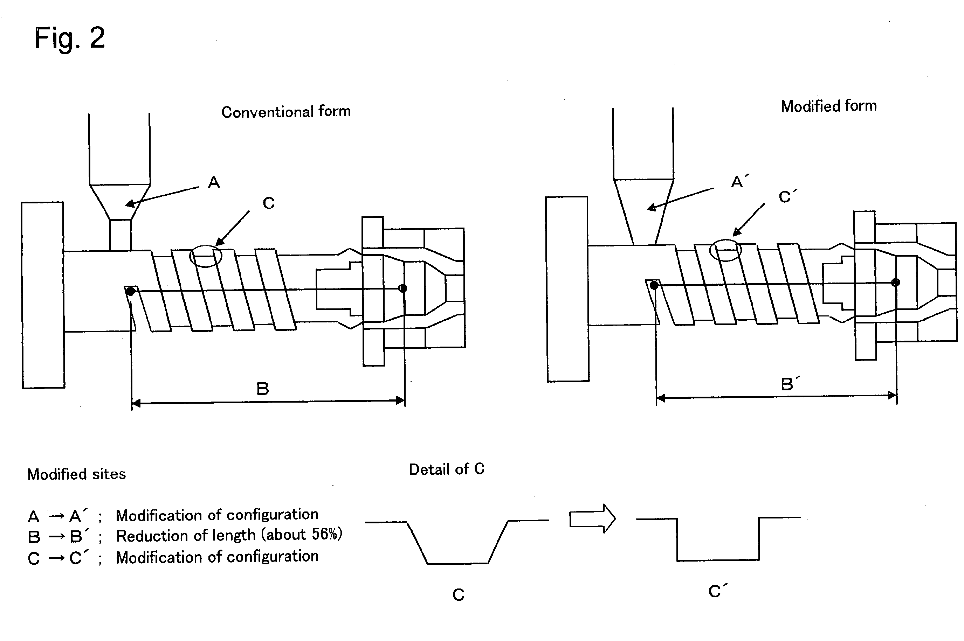

An example of such means is selection of a crosshead form structure for an extruder. (Fig. 2)
(i) The configuration of the cylinder outlet (the crosshead inlet: Fig. 2, A, A') of the conventional form had a bending section, as shown in Fig. 2A; however, that of the cylinder outlet of the present invention was linear, as shown in Fig. 2A'.
(ii) The length of the crosshead (Fig. 2 B, B') of a conventional form was 23 to 30 cm. In order to facilitate transmission of the ejection pressure and shorten the resin retention time, such length was shortened to 12 to 17 cm, i.e., the length of the form was reduced (about 52% to 58%).
(iii) The cross sectional configuration of the form groove (Fig. 2, C, C') of a conventional form was tapered as shown in Fig. 2C. In order to prevent scattering of the ejection pressure of the screw and improve pressure transmission in the resin, both sides were placed in a substantially perpendicular manner, as shown in Fig. 2C', to enhance resin fluidity.
(iv) In order to reduce abrasion heat generated between a resin and a form and to improve resin fluidity, following form hardening, thorough polishing was carried out, and a hard chromium plating was provided.

Use of such crosshead forming can remarkably improve resin fluidity, increase the amount of ejection, increase the forming speed, and prevent melting of inner core tubes at the time of provision of a protective sheathing.

Also, a protective sheathing can be provided at temperatures at which the protective sheathing can be provided but the inner core tubes cannot be melted (190°C to 210°C), and preferably with a resin temperature of 180°C or lower to prevent the inner core tubes from melting at the time of provision of the protective sheathing.

### Brief Description of the Drawings

Fig. 1 shows a control tube (external size: 18 mm x 10 mm) comprising 2 inner core tubes each having the external size and internal size of 8 mm x 6 mm.
Fig. 2 shows the structure of the crosshead form of an extruder.

### Description of Numerical References

1: Protective sheathing
2: Inner core tube
3: Inner core tube
A, A': Outlet of cylinder (inlet of a crosshead form)
B, B': Length of crosshead
C, C': Form groove

This description includes part or all of the contents as disclosed in the description and/or drawings of Japanese Patent Application No. 2005-141416, which is a priority document of the present application.

### Examples

Hereafter, the present invention is described in greater detail with reference to the examples, although the technical scope of the present invention is not limited thereto.

### (Example 1)

### (1) Production of inner core tube

Inner core tubes (outer diameter: 8 mm; inner diameter: 6 mm), i.e., a black inner core tube comprising a black pigment and a transparent inner core tube comprising no black pigment, were produced.

Inner core tubes were produced in advance using a common straight extruder from a starting resin composition predominantly comprising polypropylene and hydrogenated styrene elastomers (ratio of polypropylene to hydrogenated styrene elastomers by weight: 80:20; comprising 0.6% by weight of a hindered amine-based light stabilizer).

### (2) Provision of a protective sheathing

When the above inner core tubes were thoroughly cooled and the interior properties were thoroughly stabilized, the tubes were introduced into a form that was located at the outlet of a crosshead extruder, and the tubes were coated with a protective sheathing of a raw material comprising a non-halogen and non-phosphorus flame retardant resin composition.

### (3) Examination of forming conditions

Addition of additives (a silicone flame retardant and an inorganic filler) to the raw material improved the peelability; however, the inner core tubes retained residues of the protective sheathing scattered at the peeled positions after forming. Thus, a means of improvement was further examined.

Adhering portions may be generated at some locations because of the following conditions for provision of a protective sheathing.
(i) The temperature at which the starting coating materials is formed is high, and the temperature becomes close to the temperature at which the inner core tubes are to be formed.
(ii) The speed of forming a protective sheathing is slow, and thus, the inner core tubes are disadvantageously exposed to a high-temperature environment for a long period of time when the inner core tubes passes through the form.

The following measures were taken in order to resolve the problems (i) and (ii) above.

### A. Modification of crosshead form structure (see Fig. 2)

The starting material of the protective sheathing comprises an inorganic flame retardant such as magnesium hydroxide as described above. Thus, resin fluidity was poor, and resin did not satisfactorily flow unless the forming temperature was set at a high level. Also, it was difficult for a conventional crosshead form structure to increase the amount of the starting material to be ejected. This prolonged the time for the molten starting material to remain in the form, and friction heat was generated between resins and between resin and the form, which elevated the resin temperature to a level that was equivalent to or higher than the set temperature (note: inner core tubes passed through the crosshead).

The set forming temperatures before modification and actual resin temperatures (the portions exhibiting the highest temperatures) are shown in Table 1.

**Table 1**

| The set forming temperatures before modification and actual resin temperatures (the portions exhibiting the highest temperatures) | | | | | | | | |
|---|---|---|---|---|---|---|---|---|
| C1 | C2 | C3 | C4 | CH1 | CH2 | D1 | D2 | D3 |
| 150°C | 155°C | 170°C | 180°C | 195°C | 190°C | 180°C | 170°C | 160°C |

| | | | | | | | | |
|---|---|---|---|---|---|---|---|---|
| Actual resin temperature: about 200°C at maximum C: Cylinder (screw); CH: crosshead; D: die head | | | | | | | | |

The aforementioned forming temperature and actual resin temperature were disadvantageously at the same levels at which inner core tubes were to be formed (190 to 210°C). Thus, the inner core tubes began melting, which generated a site adhering to the protective sheathing.

In order to resolve this problem, the form was modified.

### (Details of modification)

### (i) Modification of configuration of the cylinder outlet (crosshead inlet; Fig. 2A).

Configuration A was modified into Configuration A' so as to directly apply the ejection pressure of the screw to the crosshead.

### (ii) Shortening of crosshead length (Fig. 2B)

In order to facilitate transmission of the ejection pressure and to shorten the resin retention time, the length B (25.2 cm) was reduced to the length B' (14.2 cm) to reduce the length of the form (about 56%).

### (iii) Modification of form groove (Fig. 2C)

In order to prevent scattering of the ejection pressure of the screw and to improve the pressure transmission within resin, the tapered groove C was changed into the groove C' to enhance resin fluidity.

### (iv) Treatment of form surface

In order to reduce the friction heat generated between resin and the form and to improve resin fluidity, following form hardening, thorough polishing was carried out, and a hard chromium plating was provided

Thus, resin fluidity was remarkably improved, and improvement in terms of an increased amount of ejection was also observed.

### B. Increase of forming speed and modification of forming temperature (temperature reduction)

As a result of the above-described form modification, the torque did not suffer from any problem even if the number of screw rotations was increased (i.e., from a conventional speed of 14 rpm to 60 rpm), and an increased degree of ejection was observed, which provided positive proof regarding the increase of the forming speed. In order to cope with the increased degree of ejection, regulation of an apparatus for delivering inner core tubes and an apparatus for receiving the finished product were modified (i.e., turning control). This enabled constant production at a constant forming speed (increased from the conventional forming speed of 5 m/min to 18 m/min).

Also, in order to inspect the lower limit of a temperature at which a protective sheathing could be provided, several attempts had been made. It was thus discovered that sufficiently stable forming could be realized at the forming temperatures shown below. This enabled forming at low temperatures and it enabled prevention of the temperature from reaching the temperature at which inner core tubes were to be formed.

The set forming temperatures after modification and actual resin temperatures (the portions exhibiting the highest temperatures) are shown in Table 2.

**Table 2**

| The set forming temperatures after modification and actual resin temperatures (the portions exhibiting the highest temperatures) | | | | | | | | |
|---|---|---|---|---|---|---|---|---|
| C1 | C2 | C3 | C4 | CH1 | CH2 | D1 | D2 | D3 |
| 160°C | 165°C | 170°C | 175°C | 178°C | 178°C | 160°C | 153°C | 148°C |

| | | | | | | | | |
|---|---|---|---|---|---|---|---|---|
| Actual resin temperature: about 180°C at maximum C: Cylinder (screw); CH: crosshead; D: die head | | | | | | | | |

Modification of the temperature conditions also enabled lowering of the actual resin temperature. The temperature would not reach the temperature at which inner core tubes were to be formed (190°C to 210°C), and it was below the temperature at which inner core tubes began melting. This eliminated the risk of adhesion between the protective sheathing and inner core tubes.

The above-mentioned modification of the forming speed and of the temperature conditions eliminated disadvantageous adhesion between a protective sheathing and inner core tubes. Also, the inner core tubes by themselves could minimize the influence imposed by heat generated upon application of a protective sheathing (i.e., reduction in size of a tube due to softening and deterioration in properties resulting from heat). Thus, tube qualities were also improved.

### (4) Provision of a protective sheathing

The black and the transparent inner core tubes produced in (1) above (2 tubes in total) were coated with resin compositions comprising 43% by weight ethylene-vinyl acetate copolymer, 51% by weight magnesium hydroxide, 1.3% by weight a silicone flame retardant (a flame retardant and an agent for improving peelability), 4.3% by weight an inorganic filler (a modifier such as an agent for improving peelability), and other additives (e.g., a processability-improving agent, an antioxidant, a modifier, a crosslinking agent, and a pigment) using a crosshead extruder to provide the protective sheathing. Thus, the control tube shown in Fig. 1 was produced.

### (Example 2) Combustion (flame-retardancy) test

The control tubes produced in Example 1 were subjected to the combustion (flame-retardancy) test in accordance with UL44 VW-1 of the American Wire Gauge. The VW-1 test was the most strict combustion (flame-retardancy) test of the American Wire Gauge. If a tube fulfills the requirements thereof, such tube is categorized in the superior category. The UL44 VW-1 test was employed because a control tube was protected by a covering material, which is considered to be equivalent to an electric cable.

### Test method

The sample was vertically held, a flame was adjusted so as to bring an edge of a reducing flame into contact with the sample using a Bunsen burner inclined at 20 degrees, and the sample was brought into contact with the flame 5 times (each instance of contact was carried out for 15 seconds every 15 seconds). In this case, whether or not the sample fulfilled the following conditions was examined:
(i) the sample should not spread the fire;
(ii) after each instance of contact, the duration of combustion should not be more than 60 seconds;
(iii) the area of the craft paper mounted on top of the electric cable to be burned should not be more than 25% of the entire area thereof; and
(iv) the surgical cotton under the sample should not be ignited by a substance falling off the sample.

The results showed that the sample was found to pass the VW-1 test.

### (Example 3) Weather resistance acceleration test

In the same manner as in Example 1, a yellow control tube containing no black pigment in a resin composition as a material for a protective sheathing and a black control tube containing a black pigment were produced and then subjected to the weather resistance acceleration test.

Test conditions: xenon-arc, spraying for 18 minutes during a 120-minute period, temperature: 63°C ± 2°C

The test results concerning the yellow control tube and those concerning the black control tube are shown in Table 3 and in Table 4.

**Table 3**

| | 250 hr later | 500 hr later | 1,000 hr later | 1,500 hr later | 2,000 hr later |
|---|---|---|---|---|---|
| Appearance | Normal | Normal | Normal | Normal | Normal |
| Remaining tensile strength (%) | 105 | 95 | 80 | 73 | 55 |
| Remaining elongation (%) | 101 | 80 | 63 | 42 | 30 |
| 100% Remaining modulus (%) | 106 | 113 | 114 | 108 | 90 |

**Table 4**

| | 250 hr later | 500 hr later | 1,000 hr later | 1,500 hr later | 2,000 hr later |
|---|---|---|---|---|---|
| Appearance | Normal | Normal | Normal | Normal | Normal |
| Remaining tensile strength (%) | 112 | 117 | 106 | 86 | 85 |
| Remaining elongation (%) | 112 | 110 | 100 | 75 | 72 |
| 100% Remaining modulus (%) | 104 | 110 | 105 | 104 | 106 |

The condition before the acceleration test (i.e., a blank) was designated to be 100%. A duration of 200 hours in the acceleration test is generally equivalent to one year in the open air.

All control tubes were free from abnormalities in appearance, and the resin actual value, i.e., 100% remaining modulus, did not substantially decrease. Thus, these tubes were considered to exhibit sufficient weather resistance.

### (Example 4) Weather resistance acceleration test of an inner core tube

A sample plate was prepared using a composition containing starting resin comprising 80 parts by weight polypropylene and 20 parts by weight hydrogenated styrene elastomers. Four types of raw materials for the samples were used: i.e., a raw material containing 0.6 parts by weight a hindered amine-based light stabilizer (hereafter referred to as "HALS"); a material containing no such substance; a material containing a black pigment (2% by weight of an olefin-based black master batch); and a material containing no black pigment.

### Test Method

The sample plate was mounted on the Sunshine weather-meter (63°C, with rain), the appearance of the sample was observed after a lapse of a given period of time, the sample plate was punched into dumbbell shapes, and the tensile break elongation (resin lifetime measure) was measured.

The results are shown in Table 5.

**Table 5**

| Change in tensile break elongation (unit: %) | | | | | | |
|---|---|---|---|---|---|---|
| Sample | 240 hr | 480 hr | 960 hr | 1,500 hr | 2,000 hr | Time at which abnormality in appearance occurred |
| 1 | 12.7 | 32.9 | 12.7 | Untestable | | 240 hr |
| 2 | 96.3 | 95.1 | 95.1 | 91.5 | 56.0 | 2,000 hr |
| 3 | 98.4 | 101.6 | 109.7 | 103.2 | 16.1 | Not occurred |
| 4 | 89.2 | 89.2 | 90.8 | 95.4 | 92.3 | Not occurred |

| | | | | | | |
|---|---|---|---|---|---|---|
| Sample 1: without the addition of HALS, natural (transparent) Sample 2: without the addition of HALS, black Sample 3: with the addition of HALS, natural (transparent) Sample 4: with the addition of HALS, black Abnormalities in appearance: crazing (countless minute cracks) | | | | | | |

A duration of 200 hours in the acceleration test is generally equivalent to one year in the open air.

The lifetime measure for a polypropylene-based raw material is generally time at which crazing occurred and a half-life (when reaching 50% of the original level) of tensile break elongation.

According to the above results, Sample 1 was found to become unusable 240 hours later, and Sample 3, to which HALS had been added, remained usable for 1,500 hours, which indicates remarkably improved weather resistance. A difference between Sample 2 and Sample 4 was also apparent, which indicates the effects of the addition of HALS.

All publications, patents, and patent applications cited herein are incorporated herein by reference in their entirety.

### Industrial Applicability

The control tube of the present invention is a coated tube that is produced as an alternative to a conventional copper control tube, and the control tube of the present invention is mainly used for signal tubing for instrumentation tubing or the like.

## Claims

1. A control tube comprising an inner core tube or tubes and a protective sheathing, wherein the inner core tube or tubes are mainly composed of hydrocarbon-based elastomers and the protective sheathing is composed of a non-halogen and non-phosphorus flame retardant resin composition comprising magnesium hydroxide and a silicone flame retardant.

2. The control tube according to claim 1, wherein the elastomer that constitutes the inner core tube or tubes is composed of polypropylene and a hydrogenated styrene elastomer.

3. The control tube according to claim 1, wherein the elastomer that constitutes the inner core tube or tubes contains a light stabilizer.

4. The control tube according to claim 1, wherein the base resin of the non-halogen and non-phosphorus flame retardant resin composition that constitutes the protective sheathing is an ethylene/vinyl acetate copolymer.

5. The control tube according to claim 1, wherein the protective sheathing comprises an inorganic filler.
